# EUROPÄISCHE PATENTSCHRIFT

(11) **EP 0 857 697 B1**
(45) Veröffentlichungstag und Bekanntmachung des Hinweises auf die Patenterteilung: **05.12.2001**
(21) Anmeldenummer: 98102045.6
(22) Anmeldetag: 06.02.1998
(51) Int. Cl.: C02F 3/12, C02F 3/20, C02F 3/10

(54) **Vefahren zur biologischen Reinigung von ölbelastetem Abwasser**
Process for the biological purificaiton of oil-loaded waste water
Procédé de purification biologique d'eaux usées chargées d'huile

(30) Priorität: 06.02.1997 DE 19704405
(43) Veröffentlichungstag der Anmeldung: 12.08.1998
(73) Patentinhaber: Aquadetox GmbH, 87764 Legau (DE)
(72) Erfinder: Schmidt, Dietmar, 87764 Legau (DE); Lorch, Roland, 88348 Saulgau (DE)
(74) Vertreter: Riebling, Peter, Dr.-Ing.

(56) Entgegenhaltungen:
- EP-A- 0 229 790
- WO-A-95/17351
- DE-A- 2 936 826
- DE-C- 4 403 716
- US-A- 4 137 162
- US-A- 5 543 052
- PATENT ABSTRACTS OF JAPAN vol. 097, no. 007, 31. Juli 1997 & JP 09 075075 A (KANKYO ENG KK), 25. März 1997

## Beschreibung

Gegenstand der Erfindung ist ein Verfahren zur biologischen Reinigung von mineralölhaltigem Abwasser nach dem Oberbegriff des Patentanspruchs 1.

Es sind hierbei mehrere Verfahren bekannt geworden, die darauf beruhen, eine auf einem Abwasser schwimmende Ölschicht, z.B. durch Skimmer, zu entfernen. Nachteil dieses bekannten Verfahren ist, daß die Entfernung sehr aufwendig und zeitraubend ist. Ferner ist es bekannt, ölhaltige Schwimmschichten in Abwassern mit sogenannten Benzin- oder Koaleszenz-Abscheidern zu entfernen. Diese Verfahrensweise hat den Nachteil, daß nur Schwimmschichten und Koaleszenzen zurückgehalten werden, nicht aber feinemulgierte Öle.

Um derartige feinemulgierte Öle aus ölbelasteten Abwässern zu entfernen, ist es im übrigen bekannt geworden, ein chemisches Verfahren der sogenannten Emulsionsspaltung anzuwenden. Dieses Verfahren ist jedoch außerordentlich kostenaufwendig, weil eine pH-Verschiebung stattfindet, die im Ablauf der Anlage durch eine Neutralisation wieder rückgängig gemacht werden muß, die einer Dosierung von chemisch benötigten Zuschlagsstoffen bedarf, wobei die Menge an Zuschlagstoffen aufgrund der sich ständig verändernden Abwasserzusammensetzung ständig korrigiert werden muß, was mit einem hohen Regelungs- und Maschinenaufwand verbunden ist.

Die DE-C-44 03 716 offenbart allgemein den Aufbau eines Biofilmreaktors zur mikrobiologischen Wasserbehandlung. Das dem Behälter zulaufende Abwasser wird in Gegenwart von Luftsauerstoff und immobilisierter Biomasse gereinigt. Als Träger für die Biomasse werden Flocken aus Schaumstoffpolystyren verwendet. Angewand wird dabei ein Bioreinigungsverfahren nach dem Tropfkörperprinzip, bei dem die die Biomasse tragenden Teilchen auf dem zu reinigenden Abwasser schwimmen.

Aus der DE-A-29 36 826 ist ein Verfahren zur biologischen Reinigung von Abwasser bekannt, bei dem das eingesetzte suspendierte Trägermaterial ohne Einsatz eines Siebes oder sonstiger mechanischer Rückhalteeinrichtungen im Reaktorvolumen zurückgehalten wird. Hierfür ist der Reaktorbehälter entsprechend geometrisch gestaltet, wobei sich der Ablauf an der Wasseroberfläche befindet. Die Rückhaltung der Trägerteilchen vom Ablauf erfolgt nur dann zuverlässig, wenn das Trägermaterial zu jedem Zeitpunkt schwerer als das umgebende Abwasser ist.

Die US-A-5 543 052 offenbart ein Verfahren zum Entfernen organischer Verunreinigungen aus Abwasser, unter Verwendung eines bekannten biologischen Reaktors mit immobilsierter Biomasse, der mit Filterschaum als Trägerteilchen ausgelegt ist, welcher in variablen Mengen eingebracht werden kann, so daß eine Fluidisierung der Trägerteilchen sowohl gezielt ausgeschlossen oder aber gezielt ermöglicht werden kann. Im besonderen ist das Verfahren substantiell bzw. die angeführten Schutzmechanismen sehr spezifisch auf dem chemischen Verhalten von Filterschaum aus Polyurethan (PUR) basiert, welches hohe chemische Adsorptionsfähigkeit gegenüber Phenolen aufweist. Bei einer übermäßigen Einleitung von Phenol in im Abwasser gelöster Form wird dieses rasch in einem ersten Schritt durch den PUR-Schaum adsorbiert, so große Teile des Phenols dem Abwasser entzogen und im PUR-Schaum gespeichert. Im Rahmen des biologischen Abbaus sinkt die Phenol-Belastung im Abwasser weiter, wodurch dieses aus dem PUR-Schaum desorbiert und ebenfalls, aber eben in vertretbarem Umfang, dem weiteren biologischen Abbau zugänglich gemacht wird.

Der Erfindung liegt die Aufgabe zugrunde, ein Verfahren zur biologischen Reinigung von ölbelastetem Abwasser vorzuschlagen, mit welchem mit dem Abwasser in den Behälter eingetragene Öle mit hohem Wirkungsgrad aus dem Abwasser entfernt werden können.

Zur Lösung der gestellten Aufgabe ist die Erfindung durch die technische Lehre des Anspruchs 1 gekennzeichnet.

Wesentliches Merkmal der vorliegenden Erfindung ist, daß nun erfindungsgemäss ein Behälter mit dem Abwasser beschickt wird und das Abwasser einer Belüftung unterworfen wird, wobei vom Boden dieses Behälters ausgehend, das Abwasser mit feinporigen Luftblasen durchströmt wird und daß ferner in diesen Behälter Trägerteilchen vorhanden sind, welche aerobe Mikroorganismen tragen, welche geeignet sind, Mineralöle aus dem Abwasser bzw. darin enthaltene feinemulgierte Öle zu spalten und die dabei entstehenden Spaltprodukte zumindest zum Teil aufzunehmen und aufgrund von entsprechender Sauerstoffzufuhr zumindest teilweise abzubauen.

Der Vorteil des erfindungsgemässen Verfahrens liegt also darin, daß in einer einzigen Verfahrensstufe eine Spaltung und Entfernung von Mineralölen aus einem mineralölbelasteten Abwasser geschehen kann, wobei dieses Abwasser sogar noch feinemulgierte Ölanteile enthalten kann. Dies war nach dem Stand der Technik nur in mehreren nacheinandergeschalteten Verfahrensstufen möglich, was mit einem hohen Maschinenaufwand und im übrigen mit einem sehr hohen Steuerungsaufwand verbunden war. Nach der vorliegenden Erfindung geht dies nun in ganz einfacher Weise dadurch, daß in einem derartigen Behälter eine bodennahe Belüftungsanordnung vorgesehen ist, welche vom Boden aus nach oben steigende Luftblasen im Abwasser erzeugt. Hierbei werden Luftmengen von z.B. 3 Norm-Kubikmeter Luft pro Kubikmeter Rauminhalt des mineralölbelasteten Abwassers verwendet. Diese Grenze ist jedoch nicht zwingend, sie kann in weiten Grenzen überschritten oder unterschritten werden. Zum Beispiel ist es vorteilhaft, wenn schockweise viel Öl mit dem Abwasser in den Behälter eingetragen wird und die Belüftungs-leistung des bodenseitigen Belüfters sehr stark zu steigern, z.B. auf das 3-fache des oben angegebenen Grundwertes.

Wichtig ist nun, daß in diesem Behälter die vorher genannten Trägerteilchen vorhanden sind, die im wesentlichen aus offenzelligen Schaumstoffteilchen mit geringem spezifischen Gewicht bestehen, wobei sie im Trockenzustand ein spezifisches Gewicht von 10 bis 50 kg pro m3 haben, je m3 Nutzvolumen des Behälters von 50 bis 500 Liter, Trägerteilchen eingebracht werden und ein einzelnes Trägerteilchen ein Volumen von 5 bis 500 cm3 und Makroporen von 2 bis 10 mm aufweist.

Es handelt sich hierbei um Schaumstoffträgerteilchen, die z.B. aus einem geschäumten Kunststoff bestehen können oder einem anderen geschäumten Naturmaterial, und die geeignet sind, aerobe Mikroorganismen aufzunehmen, wobei diese Trägerteilchen auch noch darüber hinaus mineralölbeständig sein müssen.

Es hat sich nun gezeigt, daß sich in den Poren bis hinein in das Innere der Schaumstoffteilchen aerobe Bakterien ansiedeln, welche geeignet sind, die langkettigen Makromoleküle des Mineralöls zu spalten und biochemisch zu verwerten. Hierunter wird eine enzymatische Spaltung des Makromoleküls verstanden, wobei durch die Zellwand der Teilchen die Spaltprodukte ins Innere aufgenommen werden und dort durch biochemische Reaktionen - bei Aufnahme von Luftsauerstoff - zu Kohlendioxid (CO2), überschüssigen Mineralsalzen, biochemisch nicht mehr verwertbaren Spaltprodukten und neuem Zellmaterial umgewandelt werden.

Hieraus ergibt sich, daß durch die enzymatische Spaltung der langkettigen Makromoleküle auch die Bakterien in den Trägerteilchen ernährt werden, wodurch ein weiteres Fortbestehen dieser Bakterien im Behälter bei geringem Verschleiß der Trägerteilchen gewährleistet ist.

Es hat sich nun herausgestellt, daß bei der bodennahen Belüftung dieses Behälters die Trägerteilchen ein fluidisiertes Festbett bilden. Dies ist ein wesentlicher Unterschied zu den bekannten Belebtschlamm-Verfahren, weil bei diesen bekannten Reinigungsverfahren die Bakterien mangels Trägerteilchen sich aneinanderketten und miteinander verklumpen, was mit dem Nachteil verbunden ist, daß dieses Belebtschlamm-Verfahren beim Eintrag von Öl schnell instabil wird, weil sich das Flockenbild auflöst und die gesamte Biomasse in kürzester Zeit ausgeschwemmt wird.

Nach einem weiteren Verfahren, nämlich dem sogenannten Festbettverfahren, ist es bekannt, daß auch derartige Bakterien sich auf einem Festbett niederlassen, um nicht ausgeschwemmt zu werden. Derartige Festbetteinrichtungen bestehen im wesentlichen aus Oberflächen mit Kanalgeometrie, die statisch in dem Abwasser gehalten werden und an denen sich die besagten Bakterien ansiedeln sollen. Da die Oberflächen statisch und unterhalb der Wasseroberfläche sind, führt dies einserseits dazu, daß bei Überfrachtung der Oberflächen die Kanäle zuwachsen oder aber im Falle von Schwimmschichten nicht in Kontakt zur Biomasse kommen, wodurch die Reinigungsleistung stark eingeschränkt ist.

Hier greift die Erfindung ein, die das sogenannte Verfahren des fluidisierten Festbettes verwendet, wobei die spezifische Dichte der normal besiedelten Trägerteilchen so gewählt ist, daß sie bei normaler Besiedelung gleich schwer wie Wasser sind und dadurch im Wasser schweben.

Dadurch werden sie aufgrund der in Bodennähe erzeugten und hochperlenden Luftblasen nach oben in Richtung zum Wasserspiegel mitgenommen, sinken dort aufgrund der spezifischen Strömungsverhältnisse im Behälter wieder an der Behälterwand herunter und werden also ständig in einem Kreislauf in dem Behälter umgewälzt.

Sobald aber eine mineralölhaltige Schwimmschicht oder Koaleszenz in den Behälter eingetragen wird, wird das Öl von den Trägerteilchen aufgesaugt, womit das spezifische Gewicht dieser Trägerteilchen sinkt und diese sich mehr an der Oberfläche,
d.h. also der Oberkante Wasserspiegel des Behälters ansiedeln.

In der Nähe des Wasserspiegels dieses Behälters ergibt sich also eine höhere Konzentration dieser Trägerteilchen, die jetzt mit Mineralöl belastet sind.
Aufgrund der Tatsache, daß nun die Belüftung im Behälter weiter erfolgt, werden also die sich an der Oberfläche des Wasserspiegels ansammelnden mit Mineralöl belasteten Trägerteilchen nach wie vor mit Sauerstoff versorgt und es findet nun die vorgenannte biologische Reinigung statt, wodurch diese Trägerteilchen allmählich von den mineralölhaltigen Komponenten befreit werden, in ihrer spezifischen Dichte wieder schwerer werden und hierdurch wiederum zum Boden des Behälters sinken, wo sie in den Kreislauf der Umwälzung zurückgelangen.

Wichtig ist, daß nun die Biomasse-Konzentration durch Konzentration der Trägerteilchen im Bereich der anfallenden Ölschwimmschicht stark ansteigt und hierdurch ein optimaler Reinigungseffekt stattfindet, denn je mehr Öl eingetragen wird, desto mehr lagern sich in diesem Bereich die Trägerteilchen an, die geeignet sind, dieses Öl aufzuspalten und zu entfernen.

Mit der gegebenen technischen Erfindung ergibt sich auch der weitere Vorteil, daß durch die entkoalisierende Wirkung dieser Trägerteilchen selbst bei intensiver Belüftung dieser Schwimmschichten, das Öl nicht unkontrolliert in dem Behälter untergemischt wird, sondern immer an der Oberfläche des Abwassers konzentriert bleibt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: ein Behälter nach der Erfindung vor Eintrag eines Öles,
- Figur 2:: der Behälter nach Figur 1 nach Eintrag eines Öles.

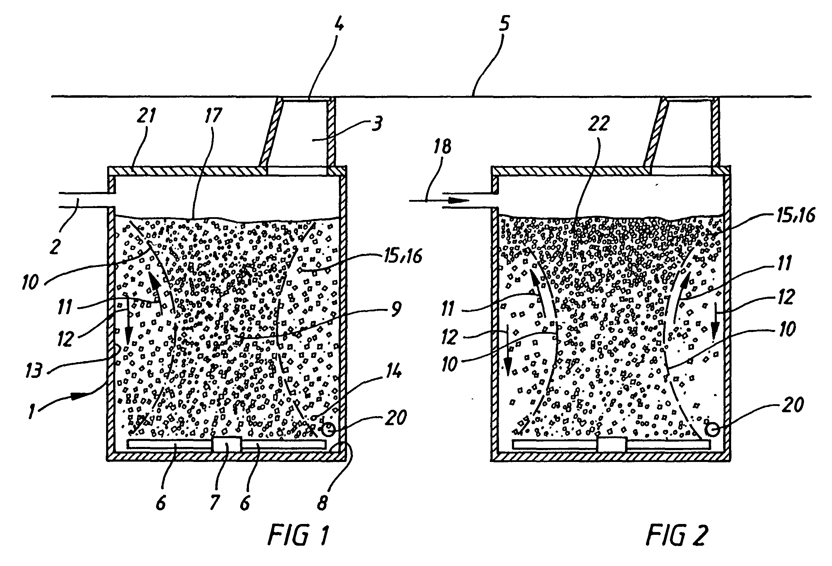

Der Behälter nach den Figuren 1 und 2 ist als Schlammfang 1 ausgebildet und weist einen Boden 8, sowie eine Behälterwand 13, eine Deckwand 21 und einen Zulauf 2 auf. In der Deckwand 21 ist in ansich bekannter Weise ein Domschacht 3 angeordnet, der von einem Schachtdeckel 4 abgeschlossen wird.
Über den Zulauf 2 kann nun ein stark schwankender Abwasser-zulauf erfolgen. Es wird noch angemerkt, daß ein derartiger Behälter in herkömmlichen Schlammfangabscheider-Ketten eingebaut werden kann.

Hierbei ist wesentlich, daß das biologische Verfahren im wesentlichen aus den Behandlungsschritten Vorklärung, Belebung und Nachklärung besteht. Die hier erfindungsgemässe Belebungsstufe besteht also gemäss der vorstehenden Beschreibung aus einem fluidisiertem Festbett aus Trägermaterial, wobei die Fluidisierung durch eine feinblasige, bodennahe Belüftung in diesem Behälter (Belebungsstufe) stattfindet. Damit besteht im übrigen - im Gegensatz zu den bekannten getauchten Festbettverfahren - dass die hier erwähnten Trägerteilchen 15 einer Selbstreinigung unterworfen sind und zwar über einen abrasiven Kontakt der fluidisierten Festbettpartikel-Aussenflächen.
Auf diese Weise entledigen sich die Trägerteilchen 15 ständig von dem an ihren Aussenoberflächen bestehenden Überschussschlamm.

Im gezeigten Ausführungsbeispiel ist der Schlammfang 1 unterhalb einer Oberkante Erdreich 5 angeordnet und an einem Boden 8 sind mehrere Belüfterschläuche 6, z.B. sternförmig, von einem Verteilerkreuz 7 ausgehend angelegt, welche möglichst großflächig den gesamten Boden 8, mit feinblasigen Luftperlen versorgen, die in Form von Luftblasen 14 (runde Teilchen in der Zeichnung) vom Boden 8 nach oben in Pfeilrichtung 11 aufsteigen.

Gleichzeitig sind in diesem Behälter 1 im dort zu reinigenden Abwasser die besagten Trägerteilchen 15 vorhanden. In diesen Trägerteilchen 15 ist die besagte Biomasse immobilisiert und diese Trägerteilchen 15 bilden eine geringe Dichtdifferenz zu dem Wasser, in dem sie schweben. Es wurde eingangs schon erwähnt, daß sich die Dichtedifferenz der Trägerteilchen 15 zum Wasser dann erhöht, sobald sie in Kontakt zu aufschwemmenden Schichten aus Leichtflüssigkeit, z.B. Mineralölen oder mineralölhaltigen Produkten, kommen.

Diese Leichtflüssigkeiten werden von den Trägerteilchen 15 aufgenommen, dadurch schwimmen sie in Form einer Schwimmschicht 22 auf und konzentrieren die mineralölhaltigen Leichtflüssigkeiten an der Oberfläche in der Nähe des Wasserspiegels 17. Dadurch werden diese Ölschichten in der Nähe des Wasserspiegels 17 fixiert und diese Trägerteilchen 15 mit der dort immobilisierten Biomasse haben eine entkoalierende Wirkung im Bereich höchster Biomasse- und Sauerstoff-Konzentration. Weil hiermit ein Stoffwechselvorgang beim Aufspalten der Makromoleküle stattfindet, erfolgt also ein zeitversetzter biologischer Abbau dieser Leichtflüssigkeiten, wobei gleichzeitig eine unkontrollierte Untermischung dieser Leichtflüssigkeiten in das Abwasser hinein verhindert wird. Hierdurch wird diese gesamte biologische Stufe gegen schockartiges Eintragen von Leichtflüssigkeiten und der damit verbundenen Gefahr des Untergangs aller Biomasse geschützt. Es erfolgt hierdurch ein selbsttätiger Schutz vor Überfrachtung.

Im gezeigten Ausführungsbeispiel nach Figur 1 bildet die Belüftungssäule 9, die sich von der bodennahen Belüftung aus ergibt, Einschnürungen 10, die etwa rotations-hyperbolisch ausgebildet sind. Hierbei streicht die Luftströmung in Pfeilrichtung 11 nach oben (sowohl in der Mitte der Belüftungssäule 9 als auch an den Randbereichen bis zu den Einschnürungen 10), gelangt dort zur Oberfläche und mündet dort in die Luft.

Die in dem Behälter schwebenden Trägerteilchen 15 werden jedoch nach dem Hochströmen bis zum Wasserspiegel 17 wieder in Pfeilrichtung 12 an der Behälterwand 13 nach unten geführt und gelangen wieder in den bodennahen Bereich, wo sich neue Luftblasen 14 an die Trägerteilchen 15 anlagern und diese wieder mit hochreissen.

Auf diese Weise kommt es zu einer ständigen Umwälzung der Trägerteilchen in dem Behälter gemäss Figur 1.

Sobald nun in Pfeilrichtung 18 eine Leichtölflüssigkeit mit dem Abwasser in den Behälter gelangt, nehmen die Trägerteilchen 15 die an der Oberfläche des Abwassers in der Nähe des Wasserspiegels 17 vorhandenen Leichtölbestandteile auf und bilden eine Schwimmschicht 22, wo also das Mineralöl gebunden wird. Wie bereits schon im allgemeinen Teil erwähnt, wird das Mineralöl also an der Schwimmschicht 22 gebunden und gleichzeitig von unten mit feinblasigen Luftblasen 14 versorgt, wodurch der biologische Abbau erfolgt, und sobald die Trägerteilchen 15 von den Ölbestandteilen befreit wurden, sinken sie in Pfeilrichtung 12 wieder an der Behälterwand 13 nach unten, wo diese mit der Umwälzströmung im Behälter wieder in Pfeilrichtung 11 mit nach oben geführt werden.

Das gereinigte Abwasser kann in Bodennähe, z.B. bei einer Saugöffnung 20, entnommen werden.

Es entsteht ein Überschussschlamm, der aus abgestorbener mineralisierter Biomasse und mineralischen Reststoffen besteht, welche in den Trägerteilchen 15 steckt. Durch den abrasiven Angriff der Trägerteilchen 15, die gegeneinander reiben, wird dieser Überschussschlamm aus den Trägerteilchen 15 herausgelöst und driftet frei im Abwasser des Behälters 1.

Über die Saugöffnung 20 wird dieser Überschussschlamm zusammen mit dem Wasser entnommen und wird einer Nachreinigung zugeführt. Durch das hohe Schlammalter und den hohen Mineralisierungsgrad liegt eine hohe Dichtedifferenz zum Wasser vor, so daß der Überschußschlamm in der Nachklärung leicht entfernt werden kann.

### Zeichnungs-Legende

- 1: Schlammfang
- 2: Zulauf
- 3: Domschacht
- 4: Schachtdeckel
- 5: Oberkante Erdreich
- 6: Belüfterschlauch
- 7: Verteilerkreuz
- 8: Boden
- 9: Belüftungssäule
- 10: Einschnürung
- 11: Pfeilrichtung
- 12: Pfeilrichtung
- 13: Behälterwand
- 14: Luftblase
- 15: Trägerteilchen
- 16: Trägermaterial
- 17: Wasserspiegel
- 18 19: Pfeilrichtung
- 20: Saugöffnung
- 21: Deckwand
- 22: Schwimmschicht

## Patentansprüche

1. Verfahren zur biologischen Reinigung von ölbelastetem Abwasser in einem Behälter nach dem Verfahren des fluidisierten Festbettes, wobei mit dem Abwasser in den Behälter eingetragene Öle entfernt werden,
**dadurch gekennzeichnet,**
**daß** sich das fluidisierte Festbett aus einer Vielzahl offenzelliger Trägerteilchen (15) zusammensetzt, die mineralölbeständig und mit offenen Makroporen im Bereich von 2 bis 10 mm ausgebildet sind, im Trockenzustand ein spezifisches Gewicht von 10 bis 50 kg pro m³ haben, je m³ Nutzvolumen des Behälters zwischen 50 bis 500 Liter Trägerteilchen eingebracht werden, wobei ein einzelnes Trägerteilchen ein Volumen von 5 bis 500 cm³ hat, und das spezifische Gewicht der mit Mikroorganismen besiedelten Trägerteilchen (15) annähernd dem spezifischen Gewicht des Abwassers entspricht, daß die Trägerteilchen, von einer Vielzahl feinperligen Luftblasen (14), durch die bodennahe flächige Belüftung (6,7) verursacht, in einer aufwärts gerichteten Strömung als Belüftungssäule (9) bis zum Wasserspiegel (17) aufgetrieben werden und an der Behälterwand (13) wieder in den bodennahen Bereich absinken und erneut in die Belüftungssäule gelangen, so daß eine stetige Umwälzung der Trägerteilchen gegeben ist.

2. Verfahren nach Anspruch 1, **dadurch gekennzeichnet, daß** nach einem Eintrag von auf dem Wasserspiegel (17) aufschwimmenden, ungelösten Ölen, die offenzelligen Trägerteilchen (15) durch die stetige Umwälzung in Kontakt mit dem Öl kommen, Öl aufnehmen, sich hierdurch das spezifische Gewicht der Trägerteilchen durch das aufgenommene Öl verringert, und als Folge die Trägerteilchen, welche bereits Öl eingelagert haben leichter sind als das sie umgebende Abwasser und hierdurch, unter Ausbildung einer Schwimmschicht (22), am Wasserspiegel (17) verbleiben.

3. Verfahren nach einem der Ansprüche 1 bis 2, **dadurch gekennzeichnet, daß** durch die Bindung der Öl-Schwimmschicht (22) innerhalb der auftreibenden Trägerteilchen (15) auf dem Wasserspiegel (17) durch die entkoalisierende Eigenschaft der Trägerteilchen ein unkontrolliertes Untermischen der Schwimmschicht (22) trotz der stetigen Umwälzung des Abwasserinhaltes im Behälter (1) sowie der intensiven Belüftung (6,7) verhindert wird.

4. Verfahren nach einem der Ansprüche 1 bis 3, **dadurch gekennzeichnet, daß** die innerhalb der Trägerteilchen (15) gebundene Schwimmschicht (22) weiterhin über die flächige, bodennahe Belüftung (6,7) feinblasig mit Luftsauerstoff versorgt wird, und als Folge der zeitgleich stattfindenden biologischen Prozesse eine langsame aber stetige biologische Eliminierung der ungelösten Öle aus der ursprünglichen Schwimmschicht (22) erfolgt.

5. Verfahren nach einem der Ansprüche 1 bis 4, **dadurch gekennzeichnet, daß** Trägerteilchen (15) welche Anteile der Schwimmschicht (22) gebunden haben allmählich als Folge der biologischen Stoffwechselprozesse wieder von diesem Öl befreit werden, wodurch sich deren spezifisches Gewicht wieder erhöht bis diese wieder vollständig in das Abwasser eintauchen und in den Strom der stetigen Umwälzung zurückkehren.

6. Verfahren nach einem der Ansprüche 1 bis 5, **dadurch gekennzeichnet, daß** über abrasiven Kontakt der solcherart fluidisierten Trägerteilchen (15) untereinander eine Selbstreinigung der Außenflächen erfolgt.

7. Vorrichtung zur Durchführung des Verfahrens nach Anspruch 1, **dadurch gekennzeichnet, daß** der Behälter zur biologischen Abwasserbehandlung als Schlammfang (1) ausgebildet ist, einen Abwasser-Zulauf (2) oben, einen bodenseitigen Abwasser-Ablauf bzw. eine geeignete Fördereinrichtung mit bodenseitiger Saugöffnung (20) sowie eine flächige, bodennahe Belüftung aufweist, und Trägerteilchen (15) enthält, die mineralölbeständig und mit offenen Makroporen im Bereich von 2 bis 10 mm ausgebildet sind, im Trockenzustand ein spezifisches Gewicht von 10 bis 50 kg pro m³ haben, je m³ Nutzvolumen des Behälters zwischen 50 bis 500 Liter Trägerteilchen eingebracht werden, wobei ein einzelnes Trägerteilchen ein Volumen von 5 bis 500 cm³ hat und als Trägermaterial (16) für die Mikroorganismen (1) dient.

8. Vorrichtung nach Anspruch 7, **dadurch gekennzeichnet, daß** der so abgelöste Überschußschlamm aus dem Schlammfang (1) entnommen und einer Nachklärung zugeführt wird.

## Claims

1. A process for the biological purification, by a fluidised fixed bed process in a vessel, of waste water which contains oil, wherein oil which is introduced into the vessel with the waste water is removed,
**characterised in that**
the fluidised fixed bed is composed of a multiplicity of open-cell carrier particles (15), which are resistant to mineral oil and which are formed with open macropores within the range from 2 to 10 mm and which in their dry state have a specific gravity from 10 to 50 kg per m³, between 50 and 500 litres of carrier particles are introduced per m³ of usable volume of the vessel, wherein an individual carrier particle has a volume of 5 to 500 cm³, and the specific gravity of the carrier particles (15) on which microorganisms have settled approximately corresponds to the specific gravity of the waste water, that the carrier particles are driven as an aeration column (9) in an upwardly directed flow as far as the water level (17) by a multiplicity of fine air bubbles (14) which are produced by two-dimensional aeration (6,7) near the base, and descend again at the vessel wall (13) into the region near the base and enter the aeration column again so that a constant circulation of the carrier particles is produced.

2. A process according to claim 1, **characterised in that** after the introduction of undissolved oil which floats on the water level (17), the open-cell carrier particles (15) come into contact with the oil due to their continuous circulation and absorb oil, the specific gravity of the carrier particles is thereby reduced by the absorbed oil, and as a consequence carrier particles which already contain incorporated oil are lighter than the waste water surrounding them and thereby remain at the water level (17) with the formation of a floating layer (22).

3. A process according to either one of claims 1 or 2, **characterised in that** due to the bonding of the floating oil layer (22) within the carrier particles (15) which are driven up to the water level (17), any uncontrolled downward mixing of the floating layer (22) is prevented, despite the continuous circulation of the waste water content in the vessel (1) and despite the intensive aeration (6, 7), due to the de-coalescing property of the carrier particles.

4. A process according to any one of claims 1 to 3, **characterised in that** the floating layer (22) which is bonded within carrier particles (15) is supplied in addition with fine bubbles of atmospheric oxygen via the two-dimensional aeration (6, 7) near the base, and as a result of simultaneously occurring biological processes a slow but continuous biological elimination of undissolved oil from the original floating layer (22) occurs.

5. A process according to any one of claims 1 to 4, **characterised in that** carrier particles (15) which have bonded fractions of the floating layer (22) are gradually freed from said oil again as a result of biological metabolic processes, whereby the specific gravity of said carrier particles is increased again until they are completely immersed in the waste water again and return to the continuously circulating flow.

6. A process according to any one of claims 1 to 5, **characterised in that** self-cleaning of the external faces of the carrier particles that (15) is effected via abrasive contact between the carrier particles which are fluidised in this manner.

7. An apparatus for carrying out the process according to claim 1, **characterised in that** the vessel is constructed as a silt trap (1) for the biological treatment of waste water, and comprises a waste water inlet (2) at the top, a waste water outlet or a suitable feeder device with a basal aspiration opening (20) at its base, and also comprises two-dimensional aeration near its base, and contains carrier particles (15) which are resistant to mineral oil and which are formed with open macropores within the range from 2 to 10 mm, which in their dry state have a specific gravity from 10 to 50 kg per m³, between 50 and 500 litres of carrier particles are introduced per m³ of usable volume of the vessel, wherein an individual carrier particle has a volume of 5 to 500 cm³ and serves as a carrier material (16) for microorganisms (1).

8. An apparatus according to claim 7, **characterised in that** the excess sludge which is separated in this manner is removed from the silt trap (1) and is fed to a subsequent clarification stage.

## Revendications

1. Procédé d'épuration biologique d'eaux usées chargées par des huiles, dans un récipient, selon le procédé du lit fixe fluidisé, où les huiles introduites dans le récipient avec les eaux usées sont éliminées,**caractérisé en ce que**
le lit fixe fluidisé est constitué d'une pluralité de particules support (15) à pores ouverts, résistantes aux huiles minérales et ayant des macropores ouverts, dans la plage de 2 à 10 mm, ayant à l'état sec une masse volumique de 10 à 50 kg/m³, une quantité comprise entre 50 et 500 litres de particules support étant introduite dans chaque m³ de volume utile du récipient, une particule support individuelle ayant un volume de 5 à 500 cm³, et la masse volumique des particules support (15) colonisées par des micro-organismes correspondant à peu près à la masse volumique des eaux usées, **en ce que** les particules support sont exposées à une poussée ascensionnelle par une pluralité de bulles d'air (14) de la taille de fines perles, provenant d'une aération (6,7), par une surface, proche du fond, en un écoulement orienté vers le haut faisant office de colonne d'aération (9) jusqu'à la surface de l'eau (17) et redescendent contre la paroi du récipient (13), dans la zone proche du fond et parviennent de nouveau à la colonne d'aération, de sorte qu'est produite une mise en circulation continue des particules support.

2. Procédé selon la revendication 1, **caractérisé en ce que**, après avoir introduit des huiles non dissoutes, flottant à la surface de l'eau (17), les particules support (15) à pores ouverts viennent en contact avec l'huile, du fait du phénomène de circulation continue, captent l'huile, la masse volumique des particules support diminuant de ce fait, du fait de la captation d'huile et, en conséquence, les particules support, qui ont déjà intégré de l'huile, sont plus légères que les eaux usées environnantes et, de ce fait, restent à la surface de l'eau (17), en constituant une couche flottante (22).

3. Procédé selon l'une des revendications 1 à 2, **caractérisé en ce que**, du fait de la liaison de la couche flottante d'huile (22) à l'intérieur des particules support (15) en poussée ascensionnelle, à la surface de l'eau (17), tout brassage par le fond incontrôlé de la couche flottante (22) est empêché du fait de la propriété de décoalescence des particules support, malgré la circulation continue du contenu en eaux usées placé dans le récipient (1) ainsi que l'aération (6, 7) intense.

4. Procédé selon l'une des revendications 1 à 3, **caractérisé en ce que** la couche flottante (22) liée à l'intérieur des particules support (15) est, en plus, alimentée en oxygène de l'air, sous forme de fines bulles, par le biais de l'aération (6, 7), par une surface, proche du fond et, par suite des processus biologiques se produisant simultanément, une élimination biologique, lente mais continue, des huiles non dissoutes hors de la couche flottante (22) initiale a lieu.

5. Procédé selon l'une des revendications 1 à 4, **caractérisé en ce que** les particules support (15) qui se sont liées à des fractions de la couche flottante (22) sont de nouveau débarrassées de cette huile progressivement, par suite des processus biologiques de métabolisme, leur masse volumique étant ainsi de nouveau augmentée jusqu'à ce qu'elles s'enfoncent de nouveau complètement dans les eaux usées et retournent dans le flux de la circulation continue.

6. Procédé selon l'une des revendications 1 à 5, **caractérisé en ce que**, par le biais d'un contact abrasif des particules support (15) fluidisées de cette manière, est effectué, entre autres, un auto-nettoyage des surfaces extérieures.

7. Dispositif de mise en oeuvre du procédé selon la revendication 1, **caractérisé en ce que** le récipient de traitement biologique des eaux usées est réalisé sous la forme de piège à boue (1), présentant une alimentation en eaux usées (2) en partie haute, une évacuation des eaux usées du côté fond ou un dispositif de transport approprié avec une ouverture d'aspiration (20) côté fond, ainsi qu'une aération par une surface, proche du fond, et ce récipient contient des particules support (15) qui sont résistantes aux huiles minérales et ont des macropores ouverts, dans la plage de 2 à 10 mm, ayant à l'état sec une masse volumique de 10 à 50 kg/m³, une quantité comprise entre 50 et 500 litres de particules support étant introduite dans chaque m³ de volume utile du récipient, une particule support individuelle ayant un volume de 5 à 500 cm³ et servant de matériau support (16) pour les micro-organismes (1).

8. Dispositif selon la revendication 7, **caractérisé en ce que** la boue en excès, ainsi dissoute, est prélevée du piège à boue (1) et amenée à une post-clarification.
